# EUROPEAN PATENT APPLICATION

(11) **EP 4 475 296 A1**
(43) Date of publication of application: **11.12.2024**
(21) Application number: 22949032.1
(22) Date of filing: 24.10.2022
(51) Int. Cl.: H01M 50/16, H01M 50/59, H01M 50/528, H01M 50/152

(54) **CAP ASSEMBLY, BATTERY, BATTERY MODULE, BATTERY PACK, AND VEHICLE**

(30) Priority: 28.06.2022 CN 202221650525 U
(71) Applicant: Eve Power Co., Ltd., Jingmen Hubei 448000 (CN)
(72) Inventor: WU, Di, Jingmen, Hubei 448000 (CN); LI, Kaibo, Jingmen, Hubei 448000 (CN); HE, Wei, Jingmen, Hubei 448000 (CN); LIU, Jincheng, Jingmen, Hubei 448000 (CN)
(74) Representative: Herrero & Asociados, S.L.
(86) International application number: PCT/CN2022/127074
(87) International publication number: WO 2024/000947

(57) **Abstract**

The present disclosure provides a cap assembly, a battery, a battery module, a battery pack, and a vehicle, which relate to the technical field of batteries. The cap assembly is used for the battery. The battery comprises a cell and a housing for accommodating the cell. The cap assembly includes a busbar plate and a plastic pad. The busbar plate is arranged in the housing, and is attached to the top end of the cell so as to be connected to the cell. The plastic pad is located between the housing and the busbar plate. An edge of the plastic pad extends in a direction close to the busbar plate to form an isolation portion. The plastic pad can cover the busbar plate through the isolation portion, and the isolation portion can be attached to an inner wall of the housing.

## Description

The present disclosure claims priority to Chinese Patent Application No. 202221650525.6, filed to the Chinese Patent Office on June 28, 2022, the disclosure of which is hereby incorporated by reference in its entirety.

### TECHNICAL FIELD

The present disclosure relates to the technology field of batteries, and in particular, to a cap assembly, a battery, a battery module, a battery pack, and a vehicle.

### BACKGROUND

Batteries are widely used in life. Batteries in related technologies mainly include cells, a battery housing and a cap assembly. The cells are placed in the battery housing, and tabs of the cells are bent and gathered together and then connected to the cap assembly, thereby achieving electrical connection between the cap assembly and the cells, and sealing the battery housing. However, the cap assembly in related technologies has a complex structure and poor stability, which affects the service life of the battery.

### SUMMARY

The present disclosure provides a cap assembly, which is able to cover a busbar plate through an isolation portion arranged on a plastic pad, thereby providing a protection effect on the busbar plate, preventing the busbar plate from contacting a housing, improving the pressure resistance of the entire battery, ensuring structural stability, and prolonging the service life of the battery.

In a first aspect, an embodiment of the present disclosure provides a cap assembly applied to a battery. The battery includes a cell and a housing for accommodating the cell. The cap assembly includes:
a busbar plate arranged in the housing and attached to a top of the cell so as to be connected to the cell; and
a plastic pad arranged between the housing and the busbar plate, where an edge of the plastic pad extends in a direction close to the busbar plate to form an isolation portion; the plastic pad is able to cover the busbar plate through the isolation portion, and the isolation portion is able to be fit with an inner wall of the housing.

In an embodiment, an end surface of the isolation portion away from the cell is provided with a chamfer.

In an embodiment, an angle of the chamfer is less than or equal to 60°.

In an embodiment, the isolation portion and the plastic pad form a receiving groove for receiving the busbar plate; where a side wall of the receiving groove is attached to at least a part of a side wall of the busbar plate; and at least a part of a bottom of the receiving groove is in contact with a top surface of the busbar plate.

In an embodiment, a depth of the receiving groove is adapted to a thickness of the busbar plate.

In an embodiment, a diameter of the receiving groove is adapted to a diameter of the busbar plate.

The present disclosure provides a battery. By applying the cap assembly as described above, the voltage resistance of the entire battery is improved, the structural stability is ensured, and the service life of the battery is prolonged.

In a second aspect, an embodiment of the present disclosure provides a battery which includes a cell, a housing, and a cap assembly as described above. The housing is configured to accommodate the cell, and the cap assembly is respectively connected to the cell and the housing.

The present disclosure provides a battery module. By applying the battery as described above, the voltage resistance of the entire battery is improved, the structural stability is ensured, and the service life of the battery is prolonged.

In a third aspect, an embodiment of the present disclosure provides a battery module which includes a plurality of batteries as described above. The plurality of batteries are arranged in multiple rows and multiple columns.

The present disclosure provides a battery pack. By applying the battery module as described above, the voltage resistance of the entire battery is improved, the structural stability is ensured, and the service life of the battery is prolonged.

In a fourth aspect, an embodiment of the present disclosure provides a battery pack which includes a box and the battery module as described above. The battery module is provided in the box.

The present disclosure provides a vehicle. By applying the battery pack as described above, the voltage resistance of the entire battery is improved, the structural stability is ensured, and the service life of the battery is prolonged.

In a fifth aspect, an embodiment of the present disclosure provides a vehicle which includes a vehicle body and the battery pack as described above. The battery pack is provided in the vehicle body.

The beneficial effects of the present disclosure are as follows: the present disclosure provides a cap assembly, a battery, a battery module, a battery pack and a vehicle, which is able to cover a busbar plate through an isolation portion arranged on a plastic pad, thereby providing a protection effect on the busbar plate, preventing the busbar plate from contacting a housing, improving the pressure resistance of the entire battery, ensuring structural stability, and prolonging the service life of the battery. The present disclosure has a simple structure and is convenient to assemble and disassemble, can improve the voltage resistance of the entire battery, ensure structural stability, and prolong the service life of the battery.

### BRIEF DESCRIPTION OF THE DRAWINGS

FIG. 1 is a schematic structural diagram of a battery module according to an embodiment of the present disclosure.
FIG. 2 is a schematic structural diagram of a battery according to an embodiment of the present disclosure.
FIG. 3 is an exploded structural schematic diagram of a battery in an explosion state according to an embodiment of the present disclosure.
FIG. 4 is a cross-sectional view of the battery according to an embodiment of the present disclosure.
FIG. 5 is an enlarged schematic diagram of a partial structure at region A shown in FIG. 4.
FIG. 6 is an enlarged schematic diagram of a partial structure at region B shown in FIG. 4.
FIG 7 is a bottom view of the battery provided by an embodiment of the present disclosure.
FIG. 8 is a cross-sectional view taken along a line C-C shown in FIG. 7.
FIG. 9 is an enlarged schematic diagram of a partial structure at region D shown in FIG. 8.
FIG. 10 is a bottom view of another battery according to an embodiment of the present disclosure.
FIG. 11 is a cross-sectional view taken along a line E-E shown in FIG. 10.
FIG. 12 is an enlarged schematic diagram of a partial structural at region F shown in FIG. 11.
FIG. 13 is a schematic structural diagram of a vehicle according to an embodiment of the present disclosure.

Reference numerals: 1, battery; 10, vehicle; 101, battery pack; 102, vehicle body; 1011, battery module; 1012, box; 11, cap assembly; 111, cover plate; 1111, welding portion; 1112, explosion-proof valve; 11121, explosion-proof notch; 1113, limiting portion; 1114, liquid injection hole; 112, busbar plate; 113, terminal; 114, energy absorption structure; 1141, sealing ring; 1142, plastic pad; 11421, first annular groove; 11422, second annular groove; 11423: isolation portion; 12: housing; 13, cell; 131, first electrode tab; 132, second electrode tab; 14, solder portion; 15, bead portion.

### DETAILED DESCRIPTION

In the description of the present disclosure, unless otherwise clearly specified and limited, the terms "mounted", "connected with", and "fixed" should be interpreted broadly, and may be, for example, fixed connections, detachable connections, or integral connections; it may be mechanical or electrical connections; it may also be direct connections or indirect connections via intervening structures; it may also be inner communications of two elements or interaction relationships between two elements. The specific meanings of the above terms in the present disclosure can be understood by one of ordinary skill in the art according to specific situations.

In the present disclosure, unless otherwise clearly specified or limited, a first feature is "on" or "under" a second feature may include an embodiment in which the first feature is in direct contact with the second feature, or may also include an embodiment in which the first feature and the second feature are not in direct contact with each other, but are contacted via another feature formed therebetween. Furthermore, a first feature is "on", "above", or "on top of" a second feature may include an embodiment in which the first feature is right or obliquely "on", "above", or "on top of" the second feature, or just means that the first feature is at a height higher than that of the second feature. A first feature is "below", "under", or "on bottom of" a second feature may include an embodiment in which the first feature is right or obliquely "below", "under", or "on bottom of" the second feature, or just means that the first feature is at a height lower than that of the second feature.

It should be understood that orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientations or positional relationships shown in the accompanying drawings. It is merely for the convenience of describing the present disclosure and simplifying the description, rather than indicating or implying that the indicated device or element must have a specific orientation, be constructed and operated in a specific orientation, and therefore should not be understood as a limitation on the present disclosure. In the description of the present disclosure, unless otherwise specified, "a plurality of" means two or more. Furthermore, the terms "first" and "second" are only used for distinguishing in description, and do not have a special meaning. The terms "first position" and "second position" mean two different positions.

The present disclosure is further described below with reference to the accompanying drawings and embodiments.

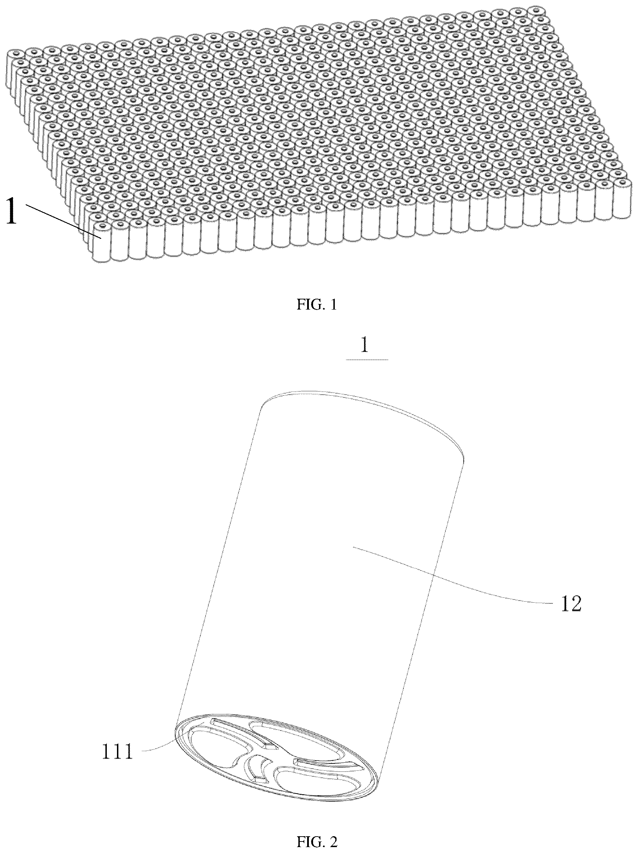

The present embodiment provides a vehicle, which includes a vehicle body and a battery pack. The battery pack is provided in the vehicle body, and supplies electric power to the vehicle body to drive the vehicle body to move. The battery pack includes a box and a battery module. The battery module is provided in the box, that is, the battery module is fixed and protected by the box. In an embodiment, in order to increase the maximum amount of electricity that can be stored in the entire battery module as far as possible, as shown in FIG. 1, the battery module includes a plurality of batteries 1, and the plurality of batteries 1 are arranged in multiple rows and multiple columns. The number and the specific arrangement manner of the batteries 1 may be adjusted according to actual situations, which is not limited in this embodiment.

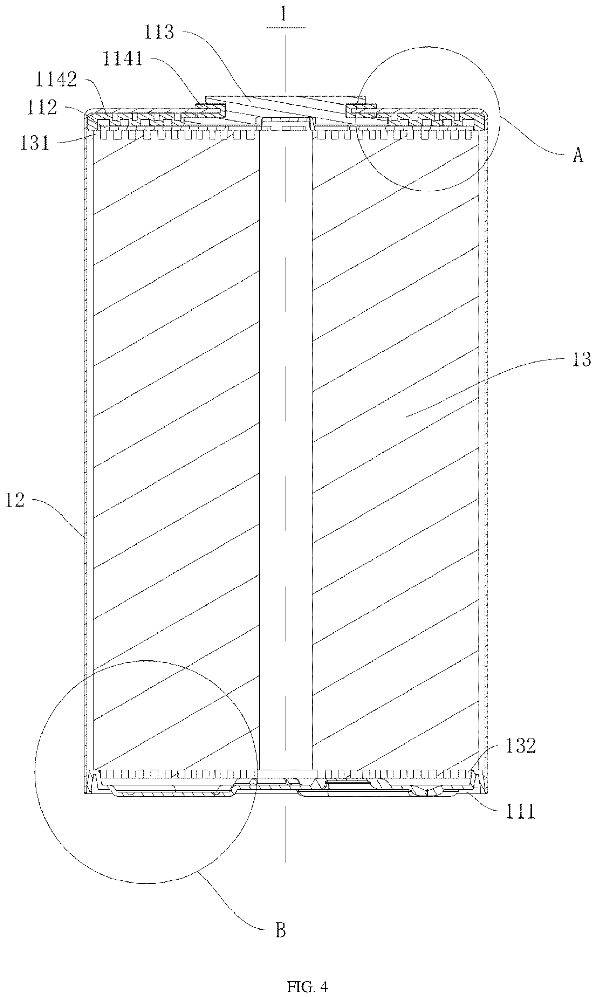

As shown in FIGS. 2, 3 and 4, the battery includes a cell 13, a housing 12 and a cap assembly 11. The housing 12 is configured to accommodate the cell 13. The cap assembly 11 is respectively connected to the cell 13 and the housing 12. The cap assembly 11 includes a cover plate 111, a busbar plate 112 and a terminal 113. The cover plate 111 is arranged at a bottom end of the housing 12 and is connected to a second electrode tab 132 of the cell 13. The busbar plate 112 is attached to a top end of the cell 13, so as to be connected to a first electrode tab 131 of the cell 13. The terminal 113 penetrates a top end of the housing 12 and is electrically coupled to the busbar plate 112, and a gap exists between a top end of the busbar plate 112 and a bottom end of the terminal 113. In this embodiment, the first electrode tab 131 is a positive electrode tab, and the second electrode tab 132 is a negative electrode tab.

In the cap assembly 11 in this embodiment, friction and collision can be avoided during assembly and use by leaving a gap between the busbar plate 112 and the terminal 113, thereby ensuring the working performance and service life of the battery 1 as far as possible, and minimizing the number of components required for the cap assembly 11 as far as possible, saving manufacturing costs and reducing assembly and disassembly processes. The cap assembly 11 can avoid friction and collision during assembly and use, thereby ensuring the working performance and service life of the battery 1 as much as possible, and minimizing the number of components required for the cap assembly 11 as much as possible, saving manufacturing costs and reducing assembly and disassembly processes.

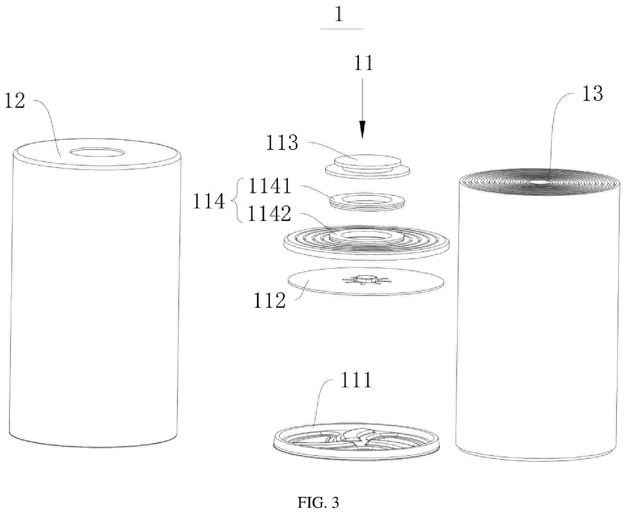

In this embodiment, as shown in FIGS. 3, 4 and 5, the cap assembly 11 further includes an energy absorption structure 114. The energy absorption structure 114 is connected to the terminal 113, the housing 12 and the busbar plate 112 respectively, and the energy absorption structure 114 is configured to create a gap between the top end of the busbar plate 112 and the bottom end of the terminal 113. By providing the energy absorption structure 114, it can provide shock absorption and buffering effects among the terminal 113, the housing 12 and the busbar plate 112, thereby enhancing the ability of shock resistance and impact resistance of the battery 1, and prolonging the service life of the entire battery 1.

In an embodiment, the energy absorption structure 114 includes a sealing ring 1141 and a plastic pad 1142. The sealing ring 1141 is arranged between the housing 12 and the terminal 113. The plastic pad 1142 is arranged between the housing 12 and the busbar plate 112. The sealing ring 1141 penetrates through the plastic pad 1142. By providing the sealing ring 1141, sealing between the terminal 113 and the housing 12 can be achieved, thereby ensuring the use safety of the cap assembly 11. Furthermore, a gap is formed between the top end of the busbar plate 112 and the bottom end of the terminal 113 by cooperation of the sealing ring 1141 and the plastic pad 1142. In an embodiment, the material of the sealing ring 1141 may be rubber resistant to electrolyte or elastic plastic resistant to electrolyte.

In this embodiment, surfaces of the plastic pad 1142 is provided concavely and convexly to absorb stress generated when the plastic pad 1142 swells, reduce a pressure applied by the stress to the cell 13 and the housing 12, and absorb a pressure generated when the cell 13 expands due to charging.

In an embodiment, a top surface of the plastic pad 1142 is provided with a plurality of first annular grooves 11421. The plurality of first annular grooves 11421 are equidistantly distributed along a radial direction, so as to improve the shock absorption and buffering effects of the entire energy absorption structure 114. A bottom surface of the plastic pad 1142 is provided with a plurality of second annular grooves 11422. The plurality of second annular grooves 11422 are equidistantly distributed along the radial direction. Because plastic pad 1142 will swell in the electrolyte of the battery 1, the stress generated by the plastic pad 1142 during swelling can be absorbed by the first annular groove 11421 and the second annular groove 11422, so as to reduce the pressure of the stress applied to the cell 13 and the housing 12. When the cell 13 is subjected to expansion due to charging, the pressure caused by the expansion of the cell 13 can also be absorbed by the first annular groove 11421 and the second annular groove 11422.

In an embodiment, the first annular grooves 11421 and the second annular grooves 11422 are distributed in a staggered manner, so that the surfaces of the plastic pad 1142 is uneven, thereby further enhancing the shock absorption and buffering effects of the entire plastic pad 1142.

In the embodiment, an edge of the plastic pad 1142 extends in a direction close to the busbar plate 112 to form an isolation portion 11423, and the plastic pad 1142 can cover the busbar plate 112 through the isolation portion 11423. One side of the isolation portion 11423 away from the busbar plate 112 is fit with an inner wall of the housing 12, that is, a side peripheral wall of the busbar plate 112 is separated from the inner wall of the housing 12 through the isolation portion 11423, so as to avoid direct contact between the busbar plate 112 and the housing 12, thereby improving the pressure resistance of the entire battery 1. In an embodiment, the busbar plate 112 is made of aluminum.

In an embodiment, in order to avoid stress concentration when the isolation portion 11423 abuts against the housing 12, an end surface of the isolation portion 11423 away from the cell 13 is provided with a chamfer, that is, the stress is dispersed through the chamfer, so as to prolong the service life of the plastic pad 11423.

In an embodiment, an angle of the chamfer is less than or equal to 60°.

In an embodiment, in order to enable the plastic pad 1142 to cover the busbar plate 112 through the isolation portion 11423, the isolation portion 11423 and the plastic pad 1142 form a receiving groove for receiving the busbar plate 112. A side wall of the receiving groove is fit with at least a part of a side wall of the busbar plate 112, and at least a part of a bottom of the receiving groove is in contact with a top surface of the busbar plate 112.

In an embodiment, in order to improve the protection to the busbar plate 112, a depth of the receiving groove is adapted to a thickness of the busbar plate 112, and a diameter of the receiving groove is adapted to a diameter of the busbar plate 112, so that all surfaces of the busbar plate 112 except those in contact with the cell 13 can be attached to the receiving groove, thereby preventing the busbar plate 112 from moving in the receiving groove and causing unnecessary abrasion.

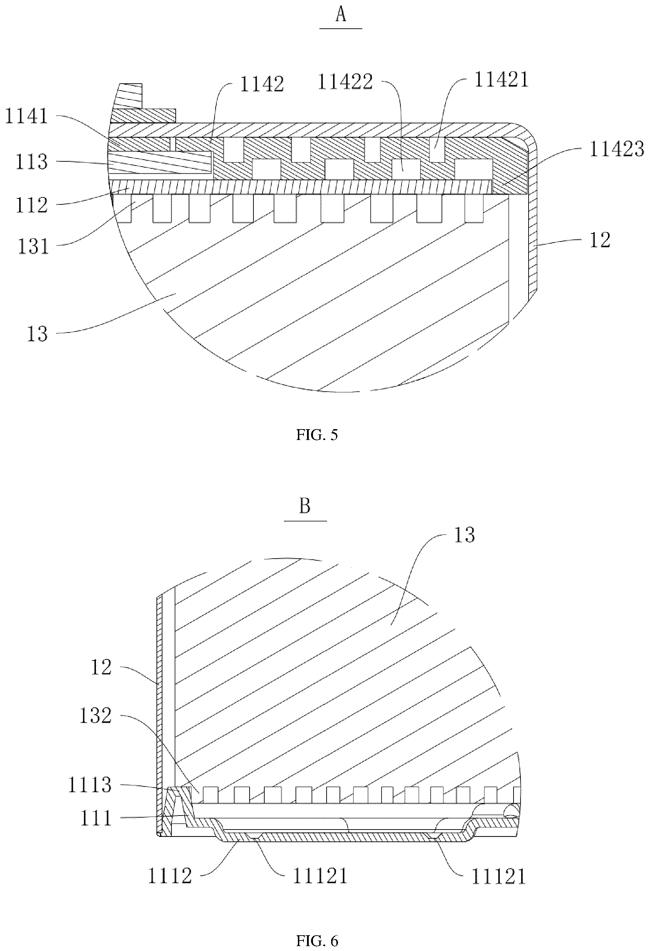

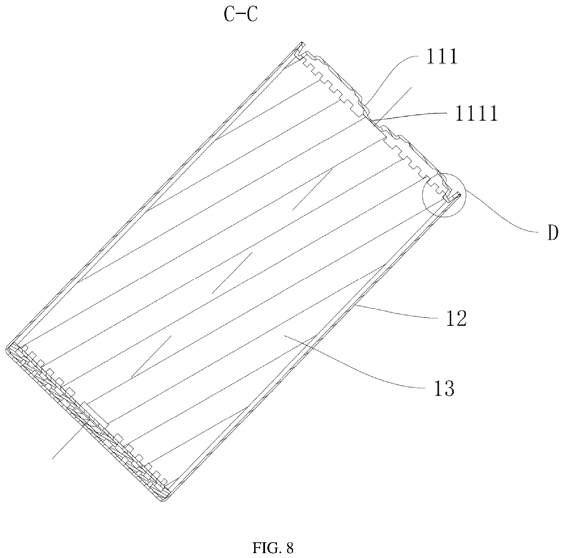

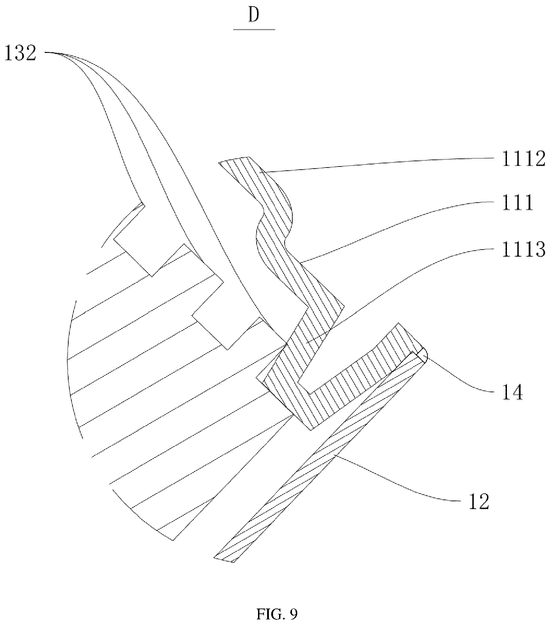

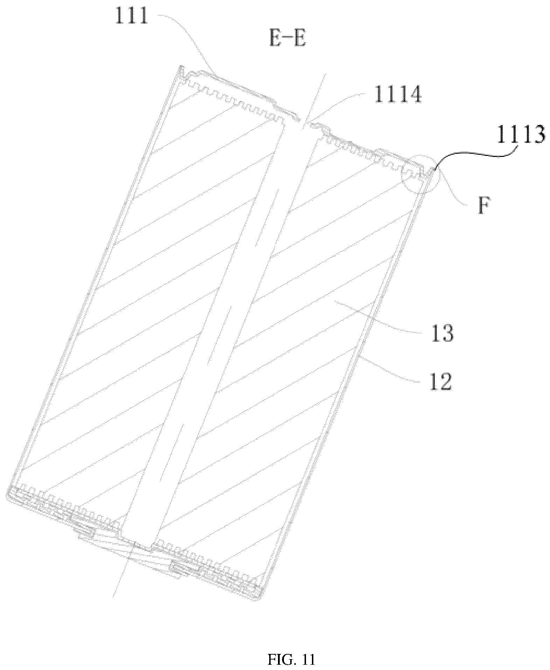

As shown in FIG. 6 to FIG. 12, the cover plate 111 is provided with welding portions 1111 and explosion-proof valves 1112. The welding portion 1111 protrudes relative to the cover plate 111 in a direction close to the cell 13, and the explosion-proof valve 1112 protrudes relative to the cover plate 111 in a direction away from the cell 13. That is, the welding portion 1111 is welded to a second electrode tab 132 of the cell 13, and the explosion-proof valve 1112 performs an explosion-proof function on the cell 13. In addition, because the welding portion 1111 protrudes relative to the cover plate 111 in a direction close to the cell 13, the explosion-proof valve 1112 protrudes relative to the cover plate 111 in a direction away from the cell 13, that is, a top surface of the cover plate 111 is spaced from a bottom surface of the second electrode tab 132 by a distance h1, and a bottom surface of the explosion-proof valve 1112 is spaced from the bottom surface of the second electrode tab 132 by a distance h2, thus, it can be seen that h2>h1>0, and thus the force generated when the cell 13 expands can be absorbed by h1, and a height difference between h2 and h1 can be used to collect explosion gas, while ensuring the stable connection between the cover plate 111 and the second electrode tab 132, avoiding the spontaneous combustion and explosion of the battery 1 due to excessive internal pressure, thereby improving the safety of the battery 1.

In an embodiment, the width of the explosion-proof valve 1112 is less than half of the radius of the housing 12, so as to reduce the exhaust space required for the entire battery module as far as possible.

In an embodiment, the explosion-proof valve 1112 is provided with an explosion-proof notch 11121. The explosion-proof notch 11121 is formed by stamping, so that when an internal pressure of the battery 1 is excessively high, the gas in the housing 12 can be released along the explosion-proof notch 11121, thereby reducing the damage to the periphery of the battery 1 caused by the gas release.

In an embodiment, a plurality of welding portions 1111 are provided, and the plurality of welding portions 1111 are annularly arranged on the cover plate 111, so as to ensure the stability of the connection with the second electrode tab 132. In an embodiment, three welding portions 1111 are provided.

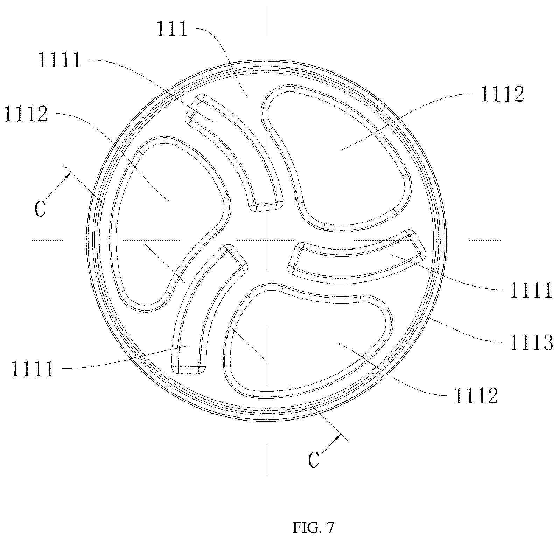

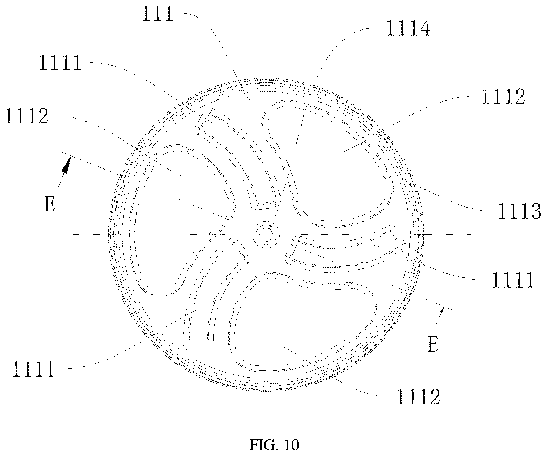

In an embodiment, as shown in FIG. 7 or FIG. 10, the welding portion 1111 is in an arc-shaped, and an optimal arc length of the welding portion 1111 is greater than half of a radius of the cell 13, so as to ensure a maximum contact area between the cell 13 and the cover plate 111 as far as possible, thereby improving stability of electrical connection between the cell 13 and the cover plate 111. In other embodiments, the welding portion 1111 may also be in other shapes, as long as the welding portion 1111 and the second electrode tab 132 can be stably welded, which is not limited in this embodiment.

In an embodiment, a plurality of explosion-proof valves 1112 are provided, and the plurality of explosion-proof valves 1112 are respectively annularly arranged on the cover plate 111, so as to improve the explosion-proof performance. In an embodiment, three explosion-proof valve 1112 are provided.

In an embodiment, the welding portions 1111 and the explosion-proof valves 1112 are distributed in a staggered manner, so as to ensure that the force applied to the entire cover plate 111 is balanced, thereby improving gas flowability inside the housing 12.

In other embodiments, as shown in FIG. 10, the cover plate 111 is further provided with a liquid injection hole 1114 for liquid injection or gap exhaust.

In an embodiment, the liquid injection hole 1114 coincides with an axis of the cell 13, that is, the liquid injection hole 1114 is arranged at a center of the cover plate 111, so as to ensure the force on the entire cover plate 111 is balanced.

In an embodiment, the cover plate 111 protrudes along an edge of the liquid injection hole 1114 in a direction close to the cell 13 to form a liquid injection boss, thereby further increasing structural strength of the middle portion of the cover plate 111.

In this embodiment, as shown in FIGS. 7 to 9, the peripheral edge of the cover plate 111 is provided with a limiting portion 1113. The limiting portion 1113 protrudes with respect to the cover plate 111 in a direction close to the cell 13 to surround the second electrode tab 132. That is, the second electrode tab 132 is positioned through the limiting portion 1113, so that the strength of the entire cover plate 111 can be enhanced, and it can also facilitate accurate welding between the second electrode tab 132 and the welding portion 1111 in the future, so as to avoid the second electrode tab 132 being displaced by force during welding, which may cause the second electrode tab 132 to be close to the inner wall of the housing 12, resulting in a poor welding and a poor performance of the use of the cell 13. In addition, because the limiting portion 1113 can surround the second electrode tab 132, damage of the second electrode tab 132 may also be avoided when assembling the cell 13.

In an embodiment, a surface of the limiting portion 1113 in contact with the second electrode tab 132 is inclined, that is, a cross section of the limiting portion 113 gradually decreases in a direction from the second electrode tab 132 to the first electrode tab 131, so as to further improve a restraint capability of the second electrode tab 132, and minimize the occurrence of displacement of the second electrode tab 132 as far as possible.

Considering that after the cell 13 is placed into the housing 12 through an opening at the bottom end of the housing 12, it is necessary to cover and fix the cover plate 111 at the opening. That is, the outer circumferential edge of the cover plate 111 and the bottom end of the housing 12 are welded together by solder, so that a solder portion 14 is formed at the connection between the housing 12 and the cover plate 111, thereby achieving a stable connection between the cover plate 111 and the housing 12.

As shown in FIGS. 10 to 12, in other embodiments, a first chamfer may be provided on the housing 12 along the edge of the opening, and a corresponding second chamfer is provided on the cover plate 111. When the cover plate 111 and the housing 12 are welded by means of welding, a welding bead 15 can be formed at the connection between the housing 12 and the cover plate 111, which not only facilitates welding and reduces stress concentration, but also further improves stability of the connection between the cover plate 111 and the housing 12.

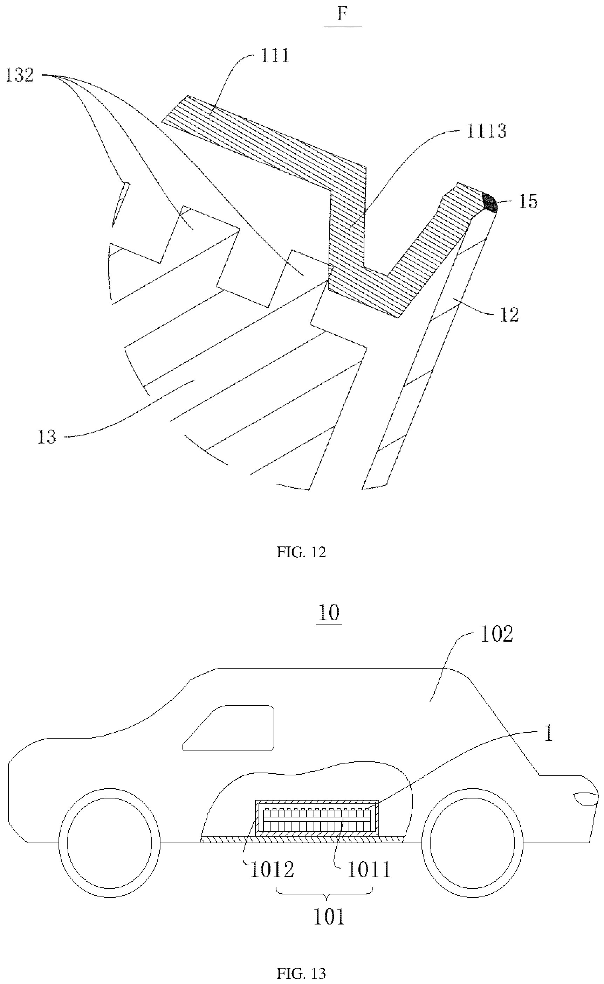

As shown in FIG. 13, the present embodiment provides a vehicle 10, which includes a vehicle body 102 and a battery pack 101. The battery pack 101 is arranged in the vehicle body 102, and supplies electric power to the vehicle body 102 to drive the vehicle body to move. The battery pack 101 includes a box 1012 and a battery module 1011. The battery module 1011 is arranged in the box 1012, and the battery module 1011 is fixed and protected by means of the box 1012.

In the description of this specification, the description with reference to the terms "some embodiments", "other embodiments", etc., means that the specific features, structures, materials or characteristics described in connection with the embodiment or example are included in at least one embodiment or example of the present disclosure. In this specification, the exemplary expressions of the above terms do not necessarily refer to the same embodiment or example. Furthermore, the specific features, structures, materials, or characteristics may be combined in any suitable manner in any one or more embodiments or examples.

## Claims

1. A cap assembly applied to a battery that comprising a cell (13) and a housing (12) for accommodating the cell (13); the cap assembly comprising:
a busbar plate (112) arranged in the housing (12) and attached to a top end of the cell (13), so as to be connected to the cell (13); and
a plastic pad (1142) arranged between the housing (12) and the busbar plate (112); wherein an edge of the plastic pad (1142) extends in a direction close to the busbar plate (112) to form an isolation portion (11423); the plastic pad (1142) is able to cover the busbar plate (112) through the isolation portion (11423); and the isolation portion (11423) is able to be fit with an inner wall of the housing (12).

2. The cap assembly according to claim 1, wherein an end face of the isolation portion (11423) away from the cell (13) is provided with a chamfer.

3. The cap assembly according to claim 2, wherein an angle of the chamfer is less than or equal to 60°.

4. The cap assembly according to any one of claims 1 to 3, wherein the isolation portion (11423) and the plastic pad (1142) form a receiving groove for receiving the busbar plate (112); a side wall of the receiving groove is attached to at least a part of a side wall of the busbar plate (112), and at least a part of a bottom of the receiving groove is in contact with a top surface of the busbar plate (112).

5. The cap assembly according to claim 4, wherein a depth of the receiving groove is adapted to a thickness of the busbar plate (112).

6. The cap assembly according to claim 4, wherein a diameter of the receiving groove is adapted to a diameter of the busbar plate (112).

7. A battery comprising a cell (13), a housing (12), and the cap assembly according to any one of claims 1 to 6, wherein the housing (12) is configured to accommodate the cell (13); the cap assembly is respectively connected to the cell (13) and the housing (12).

8. A battery module comprising a plurality of batteries according to claim 7, wherein the plurality of batteries are arranged in multiple rows and multiple columns.

9. A battery pack comprising a box and the battery module according to claim 8, wherein the battery module is provided in the box.

10. A vehicle comprising a vehicle body and the battery pack according to claim 9, wherein the battery pack is provided in the vehicle body.
